# EUROPÄISCHE PATENTANMELDUNG

(11) **EP 4 358 347 A1**
(43) Veröffentlichungstag der Anmeldung: **24.04.2024**
(21) Anmeldenummer: 22202396.2
(22) Anmeldetag: 19.10.2022
(51) Int. Cl.: H02J 3/50, H02J 3/38, F03D 7/04, F03D 9/25, F03D 13/30

(54) **VERFAHREN ZUM VERMESSEN EINER ALS TESTANLAGE AUSGEWÄHLTEN WINDENERGIEANLAGE**

(71) Anmelder: Wobben Properties GmbH, 26607 Aurich (DE)
(72) Erfinder: Busker, Kai, 26629 Großefehn (DE); Mann, Tobias, 26603 Aurich (DE); Flick, Holger, 26409 Wittmund (DE)
(74) Vertreter: Eisenführ Speiser

(57) **Zusammenfassung**

Die Erfindung betrifft ein Verfahren zum Vermessen wenigstens einer als Testanlage (100') ausgewählten Windenergieanlage (100) eines mehrere Windenergieanlagen (100) aufweisenden Windparks (112), wobei der Windpark (112) an einen Netzanschlusspunkt eines elektrischen Versorgungsnetzes angeschlossen ist und wenigstens eine veränderliche Parkvorgabe erhält, wobei die Parkvorgabe wenigstens eine Regel vorgibt, die der Windpark (112) beim Einspeisen in das elektrische Versorgungsnetz einhalten muss, der Windpark (112) die Windenergieanlagen (100) mittels an die Windenergieanlagen (100) zu übertragender Anlagenvorgaben so führt, dass die Parkvorgabe eingehalten wird, und der wenigstens einen Testanlage (100') zum Vermessen jeweils eine Messkonstellation vorgegeben wird, die wenigstens eine Betriebseinstellung aufweist, um die wenigstens eine Testanlage (100') zum Vermessen mit der Messkonstellation in einem Testbetrieb zu betreiben, und der Windpark (112) so betrieben wird, dass die wenigstens eine Testanlage (100') mit der wenigstens einen Betriebseinstellung gemäß der Messkonstellation betrieben wird, und die übrigen Windenergieanlagen (100) mit Betriebseinstellungen gemäß Anlagenvorgaben betrieben werden, wobei die Anlagenvorgaben so bestimmt werden, dass der Windpark (112) die Parkvorgabe einhalten kann, während die wenigstens eine Testanlage (100') mit der Messkonstellation betrieben wird, und eine Kontrollprüfung durchgeführt wird, mit der geprüft wird, ob die wenigstens eine Testanlage (100') unter Einhaltung der Parkvorgabe zum Vermessen mit der Messkonstellation betrieben werden kann.

## Beschreibung

Die vorliegende Erfindung betrifft ein Verfahren zum Vermessen einer als Testanlage ausgewählten Windenergieanlage. Die Erfindung betrifft auch einen Windpark mit mehreren Windenergieanlagen, wobei wenigstens eine Windenergieanlage als Testanlage ausgewählt ist. Weiterhin betrifft die Erfindung ein Testsystem zum Vermessen einer als Testanlage ausgewählten Windenergieanlage.

Windenergieanlagen sind bekannt und erzeugen elektrische Leistung aus Wind. Typischerweise weisen Windenergieanlagen einen Rotor mit drei Rotorblättern auf sowie einen Generator zum Erzeugen der elektrischen Leistung. Die Windenergieanlagen sind mit einem elektrischen Versorgungsnetz verbunden und speisen die erzeugte elektrische Leistung an einem Netzanschlusspunkt in das elektrische Versorgungsnetz ein. Die Windenergieanlagen eines Windparks speisen dabei üblicherweise in denselben Netzanschlusspunkt des elektrischen Versorgungsnetzes ein.

Weitere Erzeuger und Verbraucher sind an anderen Netzanschlusspunkten ebenfalls mit dem elektrischen Versorgungsnetz verbunden. Dabei kommt es vor, dass einige Verbraucher und/oder Erzeuger abgeschaltet werden, neu an das Versorgungsnetz angeschlossen werden, oder in ihrer eingespeisten bzw. entnommenen Leistung schwanken. Das Versorgungsnetz unterliegt daher ständigen Schwankungen.

Wichtig ist, dass die Versorgungsqualität des elektrischen Versorgungsnetzes sichergestellt ist, und insbesondere eine Stabilität des elektrischen Versorgungsnetzes sichergestellt werden kann.

Um dies zu gewährleisten müssen die Windenergieanlagen und/oder Windparks beim Einspeisen in das Versorgungsnetz gewisse Vorgaben einhalten, die sie üblicherweise von einem Netzbetreiber erhalten.

Solche Vorgaben können ein Wert für eine einzuspeisende Wirkleistung oder einzuspeisende Blindleistung sein.

Es ist erforderlich, dass der Windpark während des Betriebs für den Netzbetreiber regelbar bleibt. Jedenfalls in dem Maße, dass jederzeit gewährleistet werden kann, die Vorgaben des Netzbetreibers einzuhalten.

Insbesondere muss der Windpark solche Vorgaben auch dann einhalten können, wenn eine Windenergieanlage des Windparks vermessen werden soll. Bei solchen Anlagen kann es sich z.B. um Windenergieanlagen-Prototypen handeln. Soll eine solche Windenergieanlage vermessen werden, wird sie üblicherweise aus einer Parkregelung herausgenommen, sodass die Tests, die beim Vermessen durchgeführt werden, unbeeinflusst vorgenommen werden können.

Dabei ergibt sich nun das Problem, dass auch diese zu vermessende Windenergieanlage weiterhin elektrische Leistung in das Versorgungsnetz einspeist. Da die Windenergieanlage jedoch aus der Parkregelung herausgenommen wurde, lässt sich der Windpark nur noch auf Basis der übrigen in der Parkregelung verbliebenen Windenergieanlagen regeln. Um die Vorgaben vom Netzbetreiber einhalten zu können, müssen daher die in der Parkregelung verbliebenen Windenergieanlagen den Anteil der Testanlage mit übernehmen.

Um eine Windenergieanlage vermessen zu können, werden daher üblicherweise Absprachen mit dem Netzbetreiber getroffen. Es wird dann mit dem Netzbetreiber vereinbart, dass die Windenergieanlage für die Dauer der Tests aus der Parkregelung herausgenommen wird, so dass es Einbußen in der Umsetzung der Vorgaben geben kann. Oftmals wird daher für die Durchführung solcher Tests nur eine begrenzte Zeit zur Verfügung gestellt.

Es kommt hinzu, dass die Windenergieanlage insbesondere auch bei Sturm vermessen werden soll. Gleichzeitig hat der Netzbetreiber ein erhöhtes Interesse daran, den Park bei Sturm regeln zu können. Eine Genehmigung zum Vermessen während Sturm zu erhalten, ist daher besonders schwierig.

Ein weiteres Problem besteht darin, dass vor dem Start eines Anlagentests nur schwer vorhersehbar ist, welche Windbedingungen auftreten und/oder welche Netzvorgaben eingehalten werden müssen. Es kann daher der Fall auftreten, dass der Netzbetreiber das Vermessen einer Windenergieanlage nicht erlaubt, weil er die Regelfähigkeit des Parks nicht beschränken will, obwohl keine Notwendigkeit dazu bestand.

Die Aufgabe der vorliegenden Erfindung besteht somit darin, eines der zuvor genannten Probleme zu beheben. Insbesondere soll eine automatisierte Windenergieanlagenvermessung gewährleistet werden, insbesondere derart, dass eine Absprache mit dem Netzbetreiber vermieden werden kann. Zumindest soll zu bisher bekannten Lösungen eine Alternative vorgeschlagen werden.

Gemäß der Erfindung wird ein Verfahren nach Anspruch 1 vorgeschlagen.

Ein solches Verfahren ist gerichtet auf das Vermessen wenigstens einer als Testanlage ausgebildeten Windenergieanlage eines mehrere Windenergieanlagen aufweisenden Windparks. Der Windpark ist an einen Netzanschlusspunkt eines elektrischen Versorgungsnetzes angeschlossen. Dabei erhält der Windpark wenigstens eine veränderliche Parkvorgabe, wobei die Parkvorgabe wenigstens eine Regel vorgibt, die der Windpark beim Einspeisen in das elektrische Versorgungsnetz einhalten muss.

Dazu führt der Windpark die Windenergieanlagen mittels an die Windenergieanlagen zu übertragenden Anlagenvorgaben so, dass die Parkvorgabe eingehalten wird. Das Einhalten der Parkvorgabe realisiert der Parkregler also dadurch, dass er Anlagenvorgaben an die Windenergieanlagen überträgt.

Der wenigstens einen Testanlage wird zum Vermessen jeweils eine Messkonstellation vorgegeben, um die wenigstens eine Testanlage zum Vermessen mit der Messkonstellation in einem Testbetrieb zu betreiben. Die Messkonstellation weist wenigstens eine Betriebseinstellung auf. Die Messkonstellation gibt also den Messbetrieb vor.

Gemäß der Messkonstellation können eine oder auch mehrere Betriebseinstellungen parallel oder nacheinander eingestellt werden. Eine solche Messkonstellation kann z.B. eine veränderte Drehzahl-Leistungs-Kurve sein, die auf der Testanlage getestet werden soll. Die Messkonstellation beschreibt also ein Gesamtkonzept für das Vermessen der Testanlage, gemäß dem die Testanlage im Testbetrieb vermessen wird.

Der Windpark wird so betrieben, dass die wenigstens eine Testanlage mit der Betriebseinstellung gemäß der Messkonstellation betrieben wird und die übrigen Windenergieanlagen mit Betriebseinstellungen gemäß Anlagenvorgaben betrieben werden. Dabei werden die Anlagenvorgaben so bestimmt, dass der Windpark die Parkvorgabe einhalten kann, während die wenigstens eine Testanlage mit der Betriebseinstellung der Messkonstellation betrieben wird. Die Anlagenvorgaben werden also so bestimmt, dass sie mit den verbleibenden Windenergieanlagen, also den Windenergieanlagen des Windparks ohne die Testwindenergieanlage, zur Erfüllung der Parkvorgabe führen.

Ergänzend wird eine Kontrollprüfung durchgeführt, mit der geprüft wird, ob die wenigstens eine Testanlage unter Einhaltung der Parkvorgabe zum Vermessen mit der wenigstens einen Betriebseinstellung gemäß Messkonstellation betrieben werden kann. Es wird also geprüft, ob es unter den aktuellen Bedingungen, überhaupt möglich ist, die Testanlage zu vermessen und dabei die vorgesehene die Parkvorgabe einzuhalten.

Der Windpark erhält somit die wenigstens eine veränderliche Parkvorgabe von einem Netzbetreiber. Eine solche Parkvorgabe ist z.B. eine ins Netz maximal oder minimal einzuspeisende Leistung. Ebenso kann bspw. als Parkvorgabe eine einzuspeisende Blindleistung vorgegeben werden.

Die Parkvorgabe betrifft dabei den gesamten Windpark. Ist die Parkvorgabe bspw. eine maximal einzuspeisende Leistung, so muss der Windpark als Ganzes, mit allen seinen Windenergieanlagen zusammen, die geforderte maximal einzuspeisende Leistung einhalten.

Um das Einhalten der Parkvorgabe gewährleisten zu können, überträgt der Windpark an jede der Windenergieanlagen Anlagenvorgaben. Eine einzelne Windenergieanlage des Windparks muss demnach die ihr übertragene Anlagenvorgabe einhalten. Der Windpark wird dadurch gemäß der Parkvorgabe geführt, wobei jede der Windenergieanlagen gemäß ihrer jeweiligen Anlagenvorgabe geführt wird.

Wird im Weiteren von einer oder der Testanlage gesprochen, so sind damit alle die Windenergieanlagen gemeint, die als Testanlagen ausgewählt wurden. Die Testanlage kann somit auch für mehrere Testanlagen stehen.

Die Testanlage, die vermessen werden soll, ist bspw. ein Windenergieanlagen-Prototyp. Zum Vermessen der Testanlage zählen dabei insbesondere ein Bestimmen, Vermessen oder Testen einer Leistungskurve und/oder eines Wirk-Blindleistungs-Diagramms, aber auch das Vermessen eines schalloptimierten Betriebes.

Um sicherzustellen, dass das Vermessen der Testanlage nicht durch Einwirken der Anlagenvorgabe des Windparks beeinflusst wird, wird die Testanlage während des Vermessen aus der Regelung des Windparks herausgenommen, sie erhält also keine Anlagenvorgabe. Während sich die Testanlage im Testbetrieb befindet, erhält sie daher keine Anlagenvorgabe vom Windpark. Vielmehr wird der Testanlage die Messkonstellation vorgegeben, die gerade für den jeweiligen Test erforderlich ist.

Da die Testanlage weiterhin in das elektrische Versorgungsnetz einspeist, müssen die übrigen Windenergieanlagen dies kompensieren, um die Parkvorgabe einhalten zu können.

Um sicherzustellen, dass die Parkvorgabe auch dann eingehalten wird, wenn das Einspeisen der Testanlage nicht mehr durch die übrigen Windenergieanlagen kompensiert werden kann, wird die Kontrollprüfung durchgeführt. Mit anderen Worten wird durch die Kontrollprüfung geprüft, ob die Testanlage gemäß der vorgegebenen Messkonstellation überhaupt vermessen werden kann, sodass die Parkvorgabe eingehalten wird.

Durch die Kontrollprüfung wird vorteilhaft erreicht, dass ein Abstimmen eines geplanten Tests der Testanlage mit dem Netzbetreiber entfällt. Während die Parkvorgaben das Vermessen der Testanlage im Testbetrieb zulassen, erkennt dies die Kontrollprüfung und das Vermessen der Testanlage kann wie geplant durchgeführt werden. Erkennt hingegen die Kontrollprüfung, dass die Parkvorgabe beim Vermessen der Testanlage nicht eingehalten werden kann, wird die Testanlage nicht vermessen oder der Testbetrieb abgebrochen, sollte ein Testbetrieb schon begonnen haben. Dadurch bleibt der gesamte Park regelbar. Es ist somit sichergestellt, dass die Parkvorgabe zu jeder Zeit eingehalten werden kann.

Weiterhin vorteilhaft ist, dass durch die Kontrollprüfung ein Test spontan durchgeführt werden kann, sobald geeignete Messbedingungen auftreten und anhand der Kontrollprüfung erkannt wird, dass das Vermessen der Testanlage möglich ist. Um das Vermessen der Testanlage durchzuführen, muss daher nur der Test vorbereitet werden und er kann durchgeführt werden, wenn ein geeigneter Zeitpunkt zum Vermessen aufgetreten ist.

Gemäß einem weiteren Aspekt weist zum Vermessen der wenigstens einen Testanlage die Messkonstellation einen oder mehrere Punkte auf aus der Liste umfassend:
Vorgeben eines Sollwertes einer von der wenigstens einen Testanlage abzugebenden Wirkleistung, Vorgeben eines Sollwertes einer von der Testanlage abzugebenden Blindleistung, Vorgeben eines einzustellenden Leistungsfaktors und Vorgeben einer emulierten Frequenz des elektrischen Versorgungsnetzes zum Testen eines frequenzabhängigen Verhaltens der Testanlage

Demzufolge kann zum Vermessen derTestanlage durch die Vorgabe der wenigstens einen Messkonstellation ein Arbeitspunkt eingestellt und damit gegenüber einem normalen Arbeitspunkt variiert werden. Die Testanlage wird dann bei dem eingestellten Arbeitspunkt bzw. durch den eingestellten Arbeitspunkt vermessen. Es kann auch das Verhalten untersucht werden, wenn sich der Arbeitspunkt nicht genau einstellt. Dazu kann der Arbeitspunkt variiert werden.

Durch das Vorgeben der Sollwerte werden also diese Werte eingestellt und es kann untersucht werden, ob sich diese Werte tatsächlich einstellen, und/oder welche Randbedingungen dabei auftreten. Die Messkonstellation kann auch mehrere solcher Vorgaben aufweisen, ggf. nacheinander.

Durch die Emulation der Netzfrequenz kann eine frequenzabhängige Reaktion der Testanlage überprüft bzw. vermessen werden. Dadurch kann ein Frequenzwert vorgegeben und an einem Steuereingang eingegeben werden. Die tatsächliche Netzfrequenz bleibt aber unverändert. Das Einspeisesignal muss also weiterhin nach Frequenz und Phase auf die Netzsituation abgestimmt sein, während aber an einem Steuereingang eine Frequenz willkürlich vorgegeben werden kann, um eine Reglerreaktion zu testen, insbesondere ob und wie eine Momentanreserve bei abfallender Frequenz bereitgestellt werden kann. Das kann auch so beschrieben werden, dass die tatsächliche Frequenz des elektrischen Versorgungsnetzes überschrieben wird und der Testanlage eine simulierte Frequenz des elektrischen Versorgungsnetzes vorgegeben wird. Für diese simulierte Netzfrequenz wird die Testanlage dann vermessen.

Als konkretes Beispiel wird der Testanlage dann also ein Arbeitspunkt aus Sollwert der Wirkleistung und Sollwert der Blindleistung vorgegeben. Dieser Arbeitspunkt wird angefahren und vermessen. Als ergänzender Schritt kann die simulierte Frequenz des Versorgungsnetzes vorgegeben und der Arbeitspunkt frequenzabhängig variiert und vermessen werden.

Gemäß einem weiteren Aspekt ist die Parkvorgabe ausgewählt aus der Liste umfassend:
Eine Wirkleistungseinspeisung als vom Windpark in das Versorgungsnetz einzuspeisende Wirkleistung, eine Blindleistungseinspeisung als vom Windpark in das Versorgungsnetz einzuspeisende Blindleistung, ein vom Windpark einzustellender Phasenwinkel zwischen einer Netzspannung und eingespeistem Strom, ein vom Windpark leistungsabhängig einzustellender Phasenwinkel zwischen einer Netzspannung und eingespeistem Strom in Abhängigkeit von einer bereitgestellten Wirkleistung, eine Blindleistungseinspeisung in Abhängigkeit von einer Änderung einer Netzspannung, eine leistungsabhängige Blindleistungseinspeisung als eine einzuspeisende Blindleistung in Abhängigkeit von einer eingespeisten Wirkleistung, eine Reserveleistung als eine Leistung, um die eine vom Windpark erzeugbare Wirkleistung gedrosselt ist, und um die die vom Windpark eingespeiste Wirkleistung auf ein Anforderungssignal hin erhöht werden kann und eine Momentanreserve als vom Windpark zur Reaktion auf ein Frequenzereignis zusätzlich aus kinetischer Energie einspeisbare Wirkleistung.

Bei den Parkvorgaben handelt es sich um Vorgaben vom Netzbetreiber, die dem Windpark vorgegeben werden. Dabei steht die Stabilität und Qualität des elektrischen Versorgungsnetzes im Vordergrund. Die Parkvorgabe betrifft dabei den gesamten Windpark.

Befindet sich bspw. zu viel Energie im elektrischen Versorgungsnetz, wird also mehr Leistung eingespeist als verbraucht, so erhält der Windpark die Parkvorgabe, weniger Wirkleistung einzuspeisen. Der Windpark wird abgeregelt auf bspw. 60%, 30% bis runter auf 0%.

Um zum Beispiel einer hohen Netzspannung im Versorgungsnetz spannungssenkend entgegenzuwirken, kann als Parkvorgabe eine Erhöhung der Blindleistungseinspeisung gefordert werden. Dabei kann die Vorgabe der Blindleistungseinspeisung selbst wiederum abhängig von einer Spannungsdifferenz als Differenz zwischen Nennspannung und erfasster Spannung des elektrischen Versorgungsnetzes oder abhängig von einer von dem Windpark eingespeisten Wirkleistung vorgegeben werden.

Ebenso kann der Netzbetreiber ein Interesse daran haben, ein Verhältnis von Wirkleistung zu Blindleistung vorzugeben. Dies kann durch eine Parkvorgabe eines einzustellenden Phasenwinkels zwischen eingespeistem Strom und Netzspannung erreicht werden. Dabei kann die Vorgabe des Phasenwinkels selbst wiederum abhängig von einer eingespeisten Leistung vorgegeben werden.

Durch die Vorgabe einer Reserveleistung wird der Windpark reduziert betrieben und speist weniger Wirkleistung ins elektrische Versorgungsnetz als von den Windenergieanlagen des Windparks erzeugt werden könnte, nämlich abhängig von der vorherrschenden Windgeschwindigkeit. Bei Bedarf kann der Netzbetreiber ein entsprechendes Anforderungssignal geben um die Reserveleistung abzurufen. Dann erhöht der Windpark seine eingespeiste Wirkleistung, hebt also die Drosselung auf. Diese zusätzliche Leistung kann dann dauerhaft eingespeist werden.

Eine Momentanreserve bezeichnet eine Leistung, die kurzzeitig, also sofort, innerhalb von wenigen Sekunden, insbesondere innerhalb von 3 Sekunden, zusätzlich eingespeist werden kann. Eine solche Momentanreserve wird aus der kinetischen Energie des Rotors der Windenergieanlage genommen. Bei einer solchen Entnahme wird der Rotor abgebremst, sodass eine solche Momentanreserve auch nur für einen kurzen Zeitraum eingespeist werden kann, insbesondere nur für einen Zeitraum von maximal 30 Sekunden. Dadurch kann kurzfristig auf ein Netzereignis reagiert werden, wie den Abwurf eines Erzeugers.

Nach einem weiteren Aspekt bildet eine Parkvorgabe eine Blindleistungsstellfähigkeit. Die Blindleistungsstellfähigkeit gibt dabei vor, bis zu welcher Höhe der Windpark eine Blindleistungseinspeisung auf eine Blindleistungsanforderung hin sicherstellen muss. Insbesondere definiert die Blindleistungsstellfähigkeit einen Bereich in einem Wirkleistungs-Blindleistungs-Diagramm mit einer Bereichsgrenze. Der Windpark muss dann sicherstellen, dass jederzeit zu einer aktuell eingespeisten Wirkleistung eine Blindleistung bis zur Bereichsgrenze eingespeist werden kann.

Der Windpark gewährleistet die Blindleistungsstellfähigkeit beim Vermessen der wenigstens einen Testanlage dadurch, dass, wenn der Windpark eine Blindleistungsanforderung erhält, das Vermessen der wenigstens einen Testanlage abgebrochen wird, wenn der Windpark die Blindleistungsanforderung nur ohne Weiterführen der wenigstens einen Testanlage im Testbetrieb erfüllen kann.

Der Windpark muss also sicherstellen, eine Blindleistung liefern zu können, wenn diese gefordert wird. Die Blindleistung muss nicht tatsächlich gefordert werden, es ist vielmehr notwendig, dass der Windpark aber in der Lage ist, jederzeit eine Blindleistung liefern zu können, sobald diese gefordert wird, nämlich in Höhe der durch die Blindleistungsstellfähigkeit vereinbarten Höhe. Dabei kann die Blindleistungsstellfähigkeit selbst in Abhängigkeit von einer Wirkleistung vorgegeben sein. Dies lässt sich dann durch die Bereichsgrenze in dem Wirkleistungs-Blindleistung-Diagramm darstellen. Ist die Blindleistungsstellfähigkeit z.B. unabhängig von der Wirkleistung vorgegeben, so wird sie begrenzt und dadurch vorgegeben durch eine minimale und eine maximale Blindleistung. Die Blindleistungsstellfähigkeit definiert dann den Bereich zwischen minimaler und maximaler Blindleistung. Es muss dann also sichergestellt werden, dass der Windpark jederzeit eine Blindleistung zwischen der minimalen und maximalen Blindleistung einspeisen kann.

Da sich jedoch die Testanlage im Testbetrieb befindet, ergibt sich zunächst das Problem, dass der Windpark nur die übrigen Windenergieanlagen regeln kann und die Testanlage unkontrolliert Wirkleistung und Blindleistung einspeist, also unabhängig von einer etwaigen Vorgabe durch den Windpark. Wird dann bspw. eine Blindleistung vom Park angefordert, die über dem Wert liegt, den die übrigen Anlagen liefern können, könnte der Windpark die angeforderte Blindleistung nicht liefern. Ebenso könnte der Windpark nicht sicherstellen, dass nicht zu viel Wirkleistung eingespeist wird. Selbst wenn die übrigen Windenergieanlagen abgeschaltet oder zumindest auf null Wirkleistung geregelt werden und nicht mehr ins elektrische Versorgungsnetz einspeisen, speist die Testanlage weiterhin einen gewissen Leistungsanteil Wirkleistung ins elektrische Versorgungsnetz, solange sie sich im Testbetrieb befindet, in dem Wirkleistung eingespeist wird.

Um dennoch die Blindleistungsstellfähigkeit sicherstellen zu können, ist vorgesehen, dass das Vermessen der Testanlage automatisch abgebrochen werden kann, wenn ein Beitrag der Testwindenergieanlage zum Einhalten der Parkanforderung benötigt wird. Die Testanlage verlässt dann den Testbetrieb und ist dann wieder vom Windpark regelbar. Der Abbruch ist demzufolge notwendig, wenn tatsächlich eine Blindleistungsanforderung an den Windpark gestellt wird. Dabei wird das Vermessen der Testanlage erst abgebrochen, wenn erkannt wird, dass die vom Windpark angeforderte Blindleistung nur dann bereitgestellt werden kann, wenn der Windpark alle Windenergieanlagen, also auch die Testanlage, regelt.

Obwohl also die Testanlage im Testbetrieb während des Vermessens als Störgröße in das elektrische Versorgungsnetz einspeist und dabei vom Windpark nicht regelbar ist, kann die Blindleistungsstellfähigkeit dennoch sichergestellt werden, indem das Vermessen der Testanlage bei Bedarf automatisch abgebrochen wird. Für den Netzbetreiber bleibt somit der gesamte Windpark zu jeder Zeit regelbar. Absprachen mit dem Netzbetreiber, ob ein Test durchgeführt werden kann und/oder darf, können daher entfallen.

Um zu erkennen, ob das Vermessen der Testanlage abgebrochen werden muss, kann die Kontrollprüfung durchgeführt bzw. dazu ausgenutzt werden.

Nach einem weiteren Aspekt sind zum Vermessen der wenigstens einen Testanlage jeweils Messkonstellationen mit unterschiedlichen Betriebseinstellungen vorgesehen, um die jeweilige Testanlage mit unterschiedlichen Messkonstellationen zu testen.

Mit der Kontrollprüfung wird zusätzlich geprüft, welche wenigstens eine Messkonstellation in Abhängigkeit vom vorherrschenden Wind, insbesondere von einer vorherrschenden Windgeschwindigkeit, für einen Anlagentest besonders bei Einhaltung der Parkvorgaben vorgebbar sind.

Die Messkonstellation, die jeweils der wenigstens einen Testanlage vorgegeben wird, wird aus einer Liste vorgebbarer Messkonstellationen ausgewählt. Insbesondere wird für die Messkonstellation eine Betriebskennlinie mit mehreren Betriebsarbeitspunkten vorgegeben. Die Messkonstellation weist also eine Betriebskennlinie mit mehreren Betriebsarbeitspunkten auf.

Die Kontrollprüfung prüft somit einerseits, ob ein bereits begonnenes Vermessen der wenigstens einen Testanlage abgebrochen werden muss und andererseits, ob ein Vermessen der Testanlage überhaupt gestartet werden kann.

Die Testanlage hat dazu die Liste vorgebbarer Messkonstellationen abgespeichert. Dabei kann es sein, dass einige dieser Messkonstellationen eine hohe Windgeschwindigkeit erfordern. Z.B., wenn die Messbetriebseinstellungen zum Vermessen der Testanlage im Sturmbetrieb dienen sollen. Umgekehrt kann es dabei Messkonstellationen geben, die auch bei niedrigen Windgeschwindigkeiten zum Vermessen der Testanlage ausgewählt werden können. Die Kontrollprüfung prüft also, welche der in der Liste abgespeicherten Messkonstellation überhaupt ausgewählt werden kann. Ist die Windgeschwindigkeit unterhalb einer Nennwindgeschwindigkeit, wird z.B. keine Messkonstellation ausgewählt, die bei Windgeschwindigkeiten größer als der Nennwindgeschwindigkeit ausgebildet werden sollen.

Insbesondere kann eine Betriebskennlinie hinterlegt sein, die der Testanlage vorgegeben ist. Die Betriebskennlinie kann eine Drehzahl-Leistungs-Kennlinie oder Drehzahl-Drehmoment-Kennlinie sein, bei der die Leistung bzw. das Drehmoment in Abhängigkeit von der erfassten Drehzahl eingestellt werden. Gemäß der Kontrollprüfung kann dann also festgestellt werden, welcher Betriebsarbeitspunkt sich bei einer aktuellen Windgeschwindigkeit eignet, um die Testanlage zu vermessen.

Nach einem weiteren Aspekt wird mit der Kontrollprüfung in Abhängigkeit von der Parkvorgabe und der Messkonstellation geprüft, ob der Windpark die Anlagenvorgaben den übrigen Windenergieanlagen so vorgeben kann, dass beim Betreiben der wenigstens einen Testanlage jeweils mit der Messkonstellation die Parkvorgabe vom Windpark insgesamt eingehalten werden kann. Insbesondere wird geprüft, ob die übrigen Windenergieanlagen einen fehlenden Beitrag der Testanlage zum Erfüllen der Parkvorgabe kompensieren können. Das Vermessen der Testanlage wird gestartet, wenn mit der Kontrollprüfung erkannt wurde, dass die Parkvorgabe eingehalten werden kann. Alternativ wird das Vermessen der Testanlage abgebrochen, wenn mit der Kontrollprüfung erkannt wurde, dass die Parkvorgabe nicht eingehalten werden kann.

Ziel ist es dabei, dass Vermessen der Testanlage automatisch durchführen zu können und dabei weiterhin die Parkvorgabe zu beachten. Die Kontrollprüfung erkennt dabei zunächst, welche Betriebseinstellung sich überhaupt bei der aktuell auftretenden Windgeschwindigkeit einstellen lässt. Zudem wird geprüft, ob die Parkvorgabe auch dann eingehalten werden kann, wenn die Testanlage mit der vorgegebenen Messkonstellation vermessen wird. Sofern die Kontrollprüfung erkennt, dass die Parkvorgabe eingehalten werden kann, wird das Vermessen der Testanlage gestartet.

Auch während die Testanlage bereits vermessen wird, prüft die Kontrollprüfung, ob die Parkvorgabe weiterhin eingehalten werden kann. Sobald die übrigen Windenergieanlagen den von der Testanlage eingespeisten Beitrag nicht mehr kompensieren können, wird das Vermessen abgebrochen.

Die Kontrollprüfung ermöglicht somit einerseits ein automatisches Starten mit einer geeigneten Messkonstellation und andererseits stellt die Kontrollprüfung sicher, dass trotz der Testanlage im Testbetrieb die Parkvorgabe eingehalten wird.

Die Kontrollprüfung prüft dabei, ob mit der jeweiligen Messkonstellation die Parkvorgabe eingehalten werden kann. Hier wurde besonders erkannt, dass zwar in Betracht kommt, dass mit einer bestimmten Messkonstellation ein Test durchgeführt werden kann, dass die Parkvorgabe aber nicht eingehalten werden kann. Durch die Kontrollprüfung kann das erkannt werden und dann kann eine andere Messkonstellation ausgewählt werden. Auf diese Art und Weise können Messkonstellationen nach und nach aus der Liste vorgebbarer Messkonstellationen ausgewählt und geprüft werden.

Nach einem weiteren Aspekt wird mit der Kontrollprüfung ein Testbeginn bestimmt. Der Testbeginn gibt einen Zeitpunkt an, zu dem das Vermessen der wenigstens einen Testanlage gestartet wird. Alternativ oder ergänzend gibt der Testbeginn einen Zeitpunkt an, zu dem die Messkonstellation vorgegeben wird.

Anhand der Kontrollprüfung wird erkannt, dass zum Zeitpunkt des Testbeginns die Parkvorgabe bei gleichzeitigem Betrieb der Testanlage im Testbetrieb eingehalten werden kann. Das Bestimmen des Testbeginns hängt somit auch davon ab, ob die Kontrollprüfung erkannt hat, dass zum Zeitpunkt des Testbeginns die Parkvorgabe eingehalten werden kann.

Um den Testbeginn zu bestimmen, kann z.B. eine Wettervorhersage zu Grunde gelegt werden. Die Testanlage wird somit dann vermessen, wenn dazu gemäß der Wettervorhersage geeignete Wetterbedingungen vorherrschen. Weiterhin ist oftmals schon bekannt, zu welchem Zeitpunkt welche Parkvorgaben einzuhalten sind. Basierend darauf kann ein geeigneter Testbeginn bestimmt werden. Die Kontrollprüfung kann somit das Vermessen der Testanlage koordinieren und einen geeigneten Testbeginn bestimmen.

Nach einem weiteren Aspekt wird zum Steuern des Vermessens ein mobiles Testsystem verwendet. Das mobile Testsystem hat die wenigstens eine zum Vermessen der Testanlage einzustellende Messkonstellation gespeichert. Das Testsystem kommuniziert mit einer Anlagensteuerung der Testanlage und/oder einer Parksteuerung des Windparks, insbesondere über eine Kommunikationsschnittstelle. Die mobile Testanlage weist somit eine solche Kommunikationsschnittstelle auf. Dabei kann entweder dem Testsystem die Parkvorgabe übermittelt werden, sodass das Testsystem die Kontrollprüfung durchführt, oder es werden der Parksteuerung die Parkvorgabe und die Messkonstellation übermittelt, wobei die Parksteuerung die Kontrollprüfung durchführt. Das beinhaltet die Möglichkeit, dass die Parksteuerung die Parkvorgabe ohnehin schon erhalten vom Netzbetreiber oder anderweitig erhalten hat.

Das mobile Testsystem ist besonderes ein tragbares Rechensystem, wie z.B. ein tragbarer Computer. Das mobile Testsystem ist kein fester Bestandteil der Testanlage, sondern wird nur zum Vermessen der Testanlage in dieser aufgestellt. Werden mehrere Windenergieanlagen als Testanlagen ausgewählt, wird in jeder Testanlage jeweils ein mobiles Testsystem aufgestellt.

Die auf der Testanlage durchzuführenden Tests sind somit auf dem mobilen Testsystem abgespeichert. Dadurch können die Tests offline vorbereitet werden und mit dem Testsystem an die Testanlage gebracht werden. Das mobile Testsystem kann über eine Datenschnittstelle dann mit der Testanlage gekoppelt werden. Über die Testanlage oder direkt kann das mobile Testsystem mit der Parksteuerung kommunizieren.

Dabei kann die Kontrollprüfung entweder auf dem Testsystem selbst oder auf Parkebene durch die Parksteuerung durchgeführt werden. Besonders bevorzugt wird die Kontrollprüfung von der Parksteuerung durchgeführt. Die Parksteuerung überträgt die Anlagenvorgaben an die Windenergieanlagen. Sie erhält ebenfalls vom Netzbetreiber die Parkvorgabe. Sofern die Kontrollprüfung somit von der Parksteuerung durchgeführt wird, entfällt der weitere Schritt, die Parkvorgabe dem Testsystem zu übermitteln.

Wenn das Testsystem direkt mit der Testanlage kommuniziert, insbesondere über die Kommunikationsschnittstelle, hat das den Vorteil, dass das Testsystem unabhängig von der Parksteuerung des Windparks eingerichtet werden kann. Viele Windparks haben komplizierte Parksteuerungen mit verschiedenen Schnittstellen. Durch die direkte Schnittstelle zur Testanlage kann eine Anpassung an spezielle Anforderungen einer Parksteuerung vermieden werden.

Durch die direkte Kommunikation des Testsystems mit der Parksteuerung ergibt sich der Vorteil, dass für einen einzelnen Windpark nur eine Schnittstelle mit dem Testsystem aufgebaut werden muss. Anstatt das Testsystem an verschiedene Schnittstellen von verschiedenen Anlagentypen anzupassen, wird das Testsystem einmalig eingerichtet für eine Kommunikation mit der Parksteuerung und kann darüber jede der Windenergieanlagen des Windparks vermessen.

Nach einem weiteren Aspekt wird das Vermessen der wenigstens einen Testanlage in Abhängigkeit von einem Freigabesignal des Windparks, insbesondere der Parksteuerung, gestartet. Das Vermessen der wenigstens einen Testanlage startet somit nur, wenn durch das Freigabesignal eine Freigabe erteilt wurde. Wenn erkannt wird, dass die Parkvorgabe nicht mehr eingehalten werden kann, entzieht der Windpark die Freigabe wieder und das Vermessen der wenigstens einen Testanlage wird abgebrochen. Insbesondere stellt das mobile Testsystem eine Freigabeanfrage zum Abrufen des Freigabesignals an den Windpark.

Die Kontrolle darüber, ob das Vermessen der Testanlage gestartet wird, obliegt somit dem Windpark. Das Freigabesignal hat dabei insbesondere den Vorteil, dass auch zwei oder mehr Windenergieanlagen in einem Windpark als Testanlage betrieben werden können. Es ist möglich, dass dann zwar eine der Testanlagen unter Einhaltung der Parkvorgabe vermessen werden kann, die Parkvorgabe hingegen nicht mehr eingehalten wird, wenn beide bzw. alle Testanlagen gleichzeitig vermessen werden. Durch das Erteilen des Freigabesignals kann dann sichergestellt werden, dass nur so viele Testanlagen zeitgleich vermessen werden, wie es die Parkvorgabe zulässt. Nur die Testanlagen, die vom Windpark die Freigabe erhalten, werden auch tatsächlich vermessen.

Um eine einfache Realisierung und Implementierung des Verfahrens zu ermöglichen, ist dabei insbesondere vorgesehen, dass zunächst das mobile Testsystem die Freigabeanfrage stellt. Das Testsystem teilt dann dem Windpark mit, dass das Vermessen der Testanlage durchgeführt werden soll. Anhand der Kontrollprüfung kann der Windpark dann entscheiden, ob das Vermessen sicher gewährleistet werden kann oder nicht und eine entsprechende Freigabe erteilten oder verweigern.

Nach einem weiteren Aspekt sind zum Vermessen der wenigstens einen Testanlage mehrere Testdurchläufe mit unterschiedlichen Messkonstellationen vorgesehen. Die Kontrollprüfung wird jeweils für einen geplanten Testdurchlauf durchgeführt. Wenn mit der Kontrollprüfung erkannt wurde, dass ein erster geplanter Testdurchlauf unter Einhaltung der Parkvorgabe nicht durchgeführt werden kann, wird ein zweiter Testdurchlauf mit gegenüber dem ersten geplanten Testdurchlauf geänderter Messkonstellation durchgeführt, mit dem die Parkvorgabe eingehalten werden kann.

Zum Vermessen der Testanlage wird somit zunächst ein bestimmter Test geplant. Für diesen kann dann bspw. die Freigabeanfrage gestellt werden. Es ist somit möglich, bereits auf Anlagenebene, z.B. durch das Testsystem, einen bestimmten Test zu präferieren. Ist also bspw. die Windgeschwindigkeit hoch, wird das Testsystem eine Messkonstellation präferieren, die hohe Windgeschwindigkeiten erfordert. Anstatt den geplanten Testdurchlauf direkt zu starten, wird aber zunächst anhand der Kontrollprüfung überprüft, ob dies die Parkvorgabe zulässt. Gerade bei dem Bespiel der hohen Windgeschwindigkeit ist es möglich, dass dann der erste geplante Testdurchlauf nicht durchgeführt werden kann. Dann wird stattdessen der zweite Testdurchlauf durchgeführt. Auch hier kann zunächst eine Freigabeanfrage an den Windpark gestellt werden. Die Kontrollprüfung prüft dann wiederum, ob die Parkvorgabe für den zweiten Testdurchlauf eingehalten werden kann.

Auch wenn ein geplanter Testdurchlauf zunächst nicht möglich wäre, ist das Vermessen der Testanlage dann möglicherweise mit dem zweiten Testdurchlauf mit geänderter Messkonstellation durchführbar.

Nach einem weiteren Aspekt erfolgt das Vermessen der wenigstens einen Testanlage mittels mehrerer Testdurchläufe mit unterschiedlichen Messkonstellationen. Den Testdurchläufen wird eine Reihenfolge vorgegeben. Die Testdurchläufe werden dann gemäß der Reihenfolge durchgeführt, sofern das nach der Kontrollprüfung zulässig ist. Ein Testdurchlauf wird in der Reihenfolge umso weiter vorne einsortiert, je mehr Leistung und/oder Blindleistung von der Testanlage bei dem Testdurchlauf in das Versorgungsnetz eingespeist werden soll. Mit "Leistung" wird grundsätzlich synonym Wirkleistung bezeichnet.

Je nach Windbedingung und/oder verfügbarer Leistung werden sodann immer erstmal die Testdurchläufe durchgeführt, die einen höheren Leistungsbedarf haben. Mit anderen Worten werden die Testdurchläufe gemäß der Reihenfolge präferiert, die bspw. nur bei hoher Windgeschwindigkeit durchgeführt werden können.

Wird anhand der Kontrollprüfung erkannt, dass aufgrund der Parkvorgabe ein Testdurchlauf nicht durchgeführt werden kann, wird der jeweils nächste Testdurchlauf der Reihenfolge ausgewählt, solange, bis sich ein geeigneter Testdurchlauf gefunden hat.

Durch die Reihenfolge wird dann auf einfache Art und Weise sichergestellt, dass das Vermessen der Testanlage an die gegebene Windbedingung und Parkvorgabe angepasst wird. Vorteilhafterweise werden aber Tests mit hohen Anforderungen bevorzugt. Bei Sturm werden also z.B. auch zunächst die Messkonstellationen gewählt, die nur während Sturms möglich sind.

Die Erfindung betrifft ebenfalls einen Windpark mit mehreren Windenergieanlagen, wobei wenigstens eine Windenergieanlage als Testanlage ausgewählt ist. Der Windpark ist an einen Netzanschlusspunkt eines elektrischen Versorgungsnetzes angeschlossen und erhält wenigstens eine veränderliche Parkvorgabe. Die Parkvorgabe gibt wenigstens eine Regel vor, die der Windpark beim Einspeisen in das elektrische Versorgungsnetz einhalten muss. Der Windpark weist auch eine Parksteuerung auf, und die Parksteuerung überträgt an die Windenergieanlagen Anlagenvorgaben, sodass die Windenergieanlagen so geführt werden, dass die Parkvorgabe eingehalten wird.

Der wenigstens einen Testanlage wird zum Vermessen jeweils eine Messkonstellation vorgegeben, die wenigstens eine Betriebseinstellung aufweist. Die wenigstens eine Testanlage wird zum Vermessen mit der Messkonstellation betrieben.

Die Parksteuerung steuert den Windpark so, dass die wenigstens eine Testanlage mit der wenigstens einen Betriebseinstellung gemäß Messkonstellation betrieben wird, und die übrigen Windenergieanlagen mit Betriebseinstellungen gemäß Anlagenvorgaben betrieben werden. Dabei werden die Anlagenvorgaben so bestimmt, dass der Windpark die Parkvorgabe einhalten kann, während die wenigstens eine Testanlage mit der Messkonstellation betrieben wird. Dabei führt die Parksteuerung und/oder ein mobiles Testsystem eine Kontrollprüfung durch, mit der geprüft wird, ob die Vermessung unter Einhaltung der Parkvorgabe vorgenommen werden kann.

Mit diesem Windpark ist es möglich, die wenigstens eine als Testanlage ausgewählte Windenergieanlage zu vermessen, ohne eine Genehmigung für den Test vom Netzbetreiber einholen zu müssen. Die Kontrollprüfung erlaubt ein automatisches Starten oder Abbrechen des Vermessens der Testanlage, sodass die Einhaltung der Parkvorgabe jederzeit sichergestellt ist.

Nach einem weiteren Aspekt ist der Windpark, insbesondere die Parksteuerung, dazu eingerichtet, das Vermessen der Testanlage nach einem Verfahren gemäß einem der zuvor beschriebenen Aspekte durchzuführen.

Dabei ist insbesondere in der Parksteuerung die Kontrollprüfung implementiert. Dazu kann das Verfahren auch einem Prozessrechner in der Windenergieanlage implementiert sein. Auf eine Freigabeanfrage der Testanlage kann die Parksteuerung dann ein Freigabesignal erteilen, wenn das Vermessen der Testanlage unter Einhaltung der Parkvorgabe durchgeführt werden kann.

Erfindungsgemäß wird auch ein mobiles Testsystem nach Anspruch 14 vorgeschlagen. Das mobile Testsystem ist zum Vermessen einer als Testanlage ausgewählten Windenergieanlage eines mehrere Windenergieanlagen aufweisenden Windparks eingerichtet. Dabei ist oder umfasst das Testsystem ein mobiles Messsystem und/oder ein mobiles Steuersystem. Das Vermessen der Testanlage erfolgt gemäß einem Verfahren nach einem der zuvor beschriebenen Aspekte. Alternativ oder ergänzend hat das Testsystem die wenigstens eine Messkonstellation gespeichert und kommuniziert mit einer Parksteuerung eines Windparks eines der zuvor beschriebenen Aspekte.

Das Testsystem ist dabei z.B. ein Computer, in dem das Verfahren implementiert wurde.

Die Testanlage wird dann aus der Regelung des Windparks herausgenommen, und die Betriebseinstellung durch eine vom Testsystem vorgegebene Messkonstellation überschrieben. Die Testanlage wird dann gemäß der Messkonstellation betrieben.

Insbesondere stellt das Testsystem eine Freigabeanfrage an die Parkregelung des Windparks, bzw. das Testsystem ist dazu eingerichtet, eine solche Freigabeanfrage zu stellen. Erst nach erteilter Freigabe durch die Parksteuerung wird die Testanlage mit der Messkonstellation betrieben.

Weist der Windpark mehrere als Testanlage ausgewählte Windenergieanlagen auf, wird jede der Testanlagen mit einem eigenen mobilen Testsystem ausgestattet.

Somit wird vorgeschlagen, dass das Testsystem die wenigstens eine Messkonstellation gespeichert hat und eine Parkkommunikationsschnittstelle aufweist, die dazu vorbereitet ist, dass das Testsystem mit einem Windpark kommuniziert, und/oder eine Anlagenkommunikationsschnittstelle aufweist, die dazu vorbereitet ist, dass das Testsystem mit einer Windenergieanlage kommuniziert.

Über diese Schnittstellen kommuniziert das mobile Testsystem somit mit dem Windpark und/oder der zu vermessenden Windenergieanlage. Diese Schnittstellen sind für diese Kommunikation besonders dadurch vorbereitet, dass die zur Vermessung notwendigen und vorstehend zur Vermessung zu übertragenden Daten an der jeweiligen Schnittstelle bereitgestellt werden, bzw. nach Empfang abgefragt werden. Besonders kann ein bekanntes Bussystem für die Kommunikation implementiert sein.

Die vorliegende Erfindung wird im Folgenden beispielhaft unter Bezugnahme auf die beigefügten Figuren näher erläutert, wobei gleiche Bezugszeichen für gleiche oder ähnliche Elementbaugruppen verwendet werden können.
- Figur 1: zeigt eine als Testanlage ausgewählte Windkraftanlage in einer perspektivischen Ansicht.
- Figur 2: zeigt einen Windpark mit mehreren Windenergieanlagen und einer als Testanlage ausgewählten Windenergieanlage.
- Figur 3: zeigt einen weiteren Windpark mit mehreren Windenergieanlagen und einer als Testanlage ausgewählten Windenergieanlage.
- Figur 4: zeigt ein Wirkleistungs-Blindleistungs-Diagramm für einen Windpark mit n Windenergieanlagen.

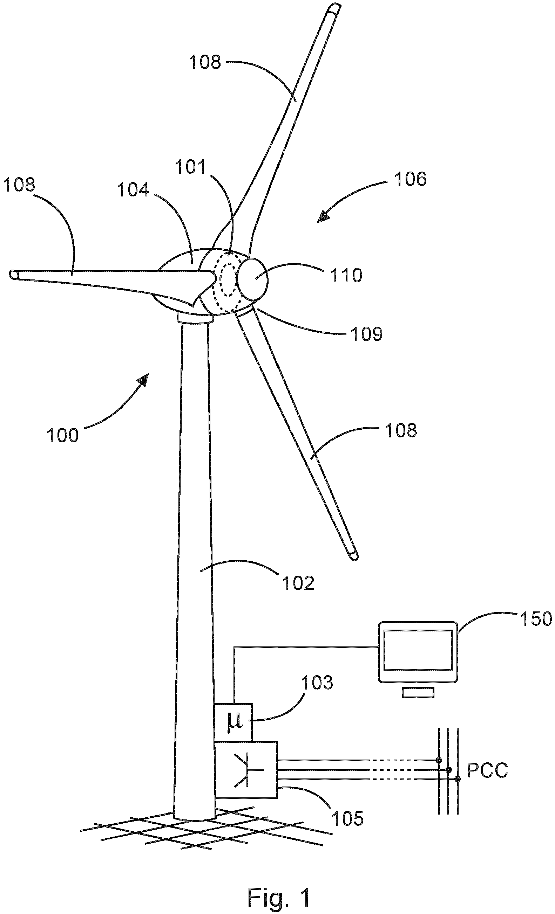

Figur 1 zeigt eine als Testanlage ausgewählte Windenergieanlage eines mehrere Windenergieanlagen aufweisenden Windparks. Die Windenergieanlage 100 hat einen Turm 102 und eine Gondel 104. An der Gondel 104 ist ein Rotor 106 angeordnet, der drei individuell verstellbare Rotorblätter 108 und einen Spinner 110 aufweist. Im Betrieb wird der Rotor 106 durch den Wind in eine Drehbewegung versetzt und treibt dadurch einen elektrischen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Anlagenvorgaben von extern, insbesondere von einem zentralen Parkrechner erhalten. Der Parkrechner kann seinerseits Parkvorgaben von extern, insbesondere von einem Netzbetreiber, erhalten.

Während des Testbetriebs werden der als Testanlage ausgewählten Windenergieanlage 100 jedoch keine Anlagenvorgaben von dem Parkrechner vorgegeben. Stattdessen wird der als Testanlage ausgewählten Windenergieanlage 100 eine Messkonstellation vorgegeben, mit der die Windenergieanlage 100 betrieben wird. Figur 1 zeigt weiterhin ein Testsystem 150, das der als Testanlage ausgewählten Windenergieanlage 100 die Messkonstellation vorgibt. Dabei kann das Testsystem 150 direkt mit der Anlagensteuerung 103 und/oder mit dem Parkrechner kommunizieren.

Anhand einer Kontrollprüfung wird geprüft, ob die als Testanlage ausgewählten Windenergieanlage 100 unter Einhaltung der Parkvorgabe zum Vermessen mit der Messkonstellation betrieben werden kann.

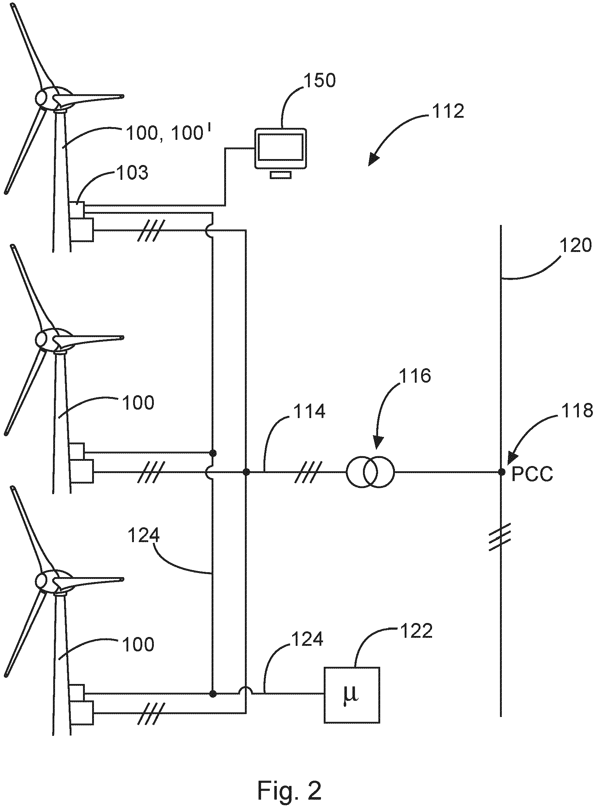

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Eine der drei Windenergieanlage 100 ist als Testanlage 100' ausgewählt, wobei die Testanlage100' während eines Testbetriebs vermessen werden soll.

Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte sowie Anlagenvorgaben an die Windenergieanlagen 100 zu übertragen.

Der Parkrechner 122 kann Parkvorgaben von extern, insbesondere von einem Netzbetreiber, erhalten. Um die Parkvorgaben einzuhalten, überträgt der Parkregler 122 Anlagenvorgaben an die Windenergieanlagen 100 mit Ausnahme der als Testanlage ausgewählten Windenergieanlage 100'. Der Testanlage 100' wird eine Betriebseinstellung als Messkonstellation vorgegeben. Zum Vermessen der Testanlage 100' wird diese mit der Messkonstellation in einem Testbetrieb betrieben.

Die Messkonstellation wird der Testanlage 100' von einem Testsystem 150 vorgegeben.

Das Testsystem 150 kommuniziert auf Anlagenebene mit der Testanlage 100', insbesondere kommuniziert das Testsystem 150 mit der Anlagensteuerung 103 der Testanlage 100'.

Das Testsystem 150 stellt eine Freigabeanfrage für das Vermessen der Testanlage 100'. Der Parkrechner 122 bewertet die Situation am Netzanschlusspunkt und erteilt der Testanlage 100' bzw. dem Testsystem 150 die Freigabe zum Vermessen, wenn anhand einer Kontrollprüfung erkannt wird, dass die Parkvorgabe eingehalten werden kann.

Vorteilhaft ist, dass das Testsystem unabhängig vom Parkrechner verwendet werden kann.

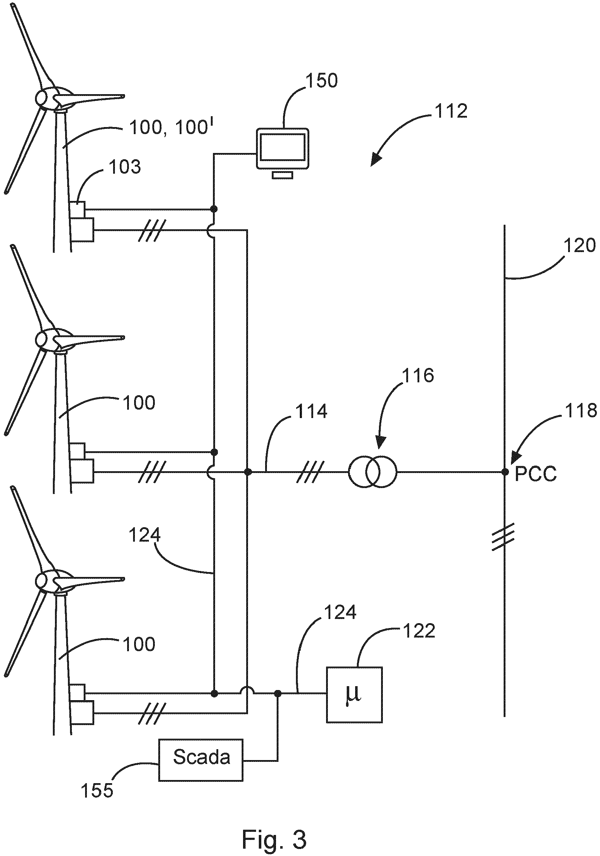

Figur 3 zeigt einen Windpark 112 mit drei Windenergieanlage 100, wobei eine der drei Windenergieanlage 100 als Testanlage 100' ausgewählt ist. Wo nicht anders gekennzeichnet entspricht der Windpark 112 dem zu Figur 2 beschriebenen Windpark 112.

Der Windpark 112 zeigt auch ein Testsystem 150 auf, wobei das Testsystem 150 direkt mit dem Parkregler 122 kommuniziert. Das Testsystem 150 stellt dann eine Freigabeanfrage an den Parkregler 122 für das Vermessen der Testanlage 103. Dazu kann z.B. eine Kennnummer der als Testanlage ausgewählten Windenergieanlage verwendet werden.

Die Messkonstellation, die der Testanlage 100' zum Vermessen vorgegeben werden soll, gibt das Testsystem 150 dann direkt an den Parkrechner 122. Der Parkrechner 122 führt eine Kontrollprüfung durch, ob die Testanlage 100' unter Einhaltung der Parkvorgabe mit der Messkonstellation vermessen werden kann. Sofern dies möglich ist, sendet der Parkrechner 122 die Messkonstellation an die Testanlage 100'. Ein SCADA-System 155 ist für das Umschalten der Windenergieanlagenkonfiguration zuständig.

Der Vorteil dieser Ausgestaltungsform liegt darin, dass nur eine Schnittstelle für das Testsystem 150 notwendig ist und es unabhängig von der Anlagensteuerung der Testanlage ausgeführt werden kann. Das Testsystem kann daher einmalig für eine Schnittstelle mit dem Parkrechner konfiguriert werden und muss danach nicht weiter umkonfiguriert werden, wenn eine andere Windenergieanlage als Testanlage ausgewählt wird, wenn sie dieselbe Schnittstelle aufweist.

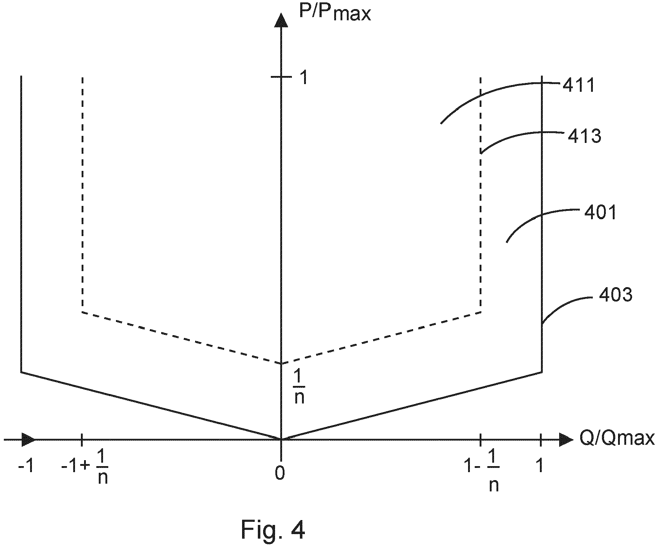

Figur 4 zeigt ein Wirkleistungs-Blindleistungs-Diagramm mit der Blindleistung auf der Abszisse und der Wirkleistung auf der Ordinate für einen Windpark mit n Windenergieanlagen. Das Diagramm ist normiert auf eine maximal mögliche Wirkleistung Pₘₐₓ sowie eine maximal mögliche Blindleistung Qₘₐₓ, die der Windpark in der Lage ist bereitzustellen.

Das Wirkleistungs-Blindleistungs-Diagramm zeigt einen Bereich 401, der durch eine Bereichsgrenze 403 umschlossen ist, wobei der Bereich 401 durch eine Blindleistungsstellfähigkeit definiert wird, die dem Windpark gemäß einer Parkvorgabe vorgegeben wurde. Gemäß der Parkvorgabe muss der Windpark somit in der Lage sein, bei Bedarf jederzeit Werte für Wirkleistung und Blindleistung liefern zu können, die sich innerhalb des Bereiches 401, umschlossen durch die Bereichsgrenze 403 befinden.

Wird nun jedoch eine Windenergieanlage als Testanlage ausgewählt, wird diese aus der Parkregelung durch den Parkrechner herausgenommen. Die Testanlage speist nun Wirkleistung und Blindleistung in den Netzanschlusspunkt ein, ohne dass dies vom Parkregler beeinflusst wird. Die Testanlage lässt sich somit als Störgröße auffassen, in dem Windpark der nun nur noch *n-1* Windenergieanlagen regeln kann.

Unter der Annahme, dass die Testanlage mit ihrer maximalen Wirkleistung einspeist und keine Blindleistung einspeist, ergibt sich dann ein Bereich 411, begrenzt durch Bereichsgrenze 413. Dabei wird angenommen, dass alle Windenergieanlagen im Windpark gleich sind. Alle Windenergieanlagen im Windpark können dann z.B. eine maximale Wirkleistung von 2 MW bereitstellen, also einspeisen. Der Windpark kann somit bei n Windenergieanlagen maximal n*2 MW bereitstellen. Bei einem Windpark mit 5 Windenergieanlagen entspräche das z.B. 10 MW an maximal bereitstellbarer Wirkleistung.

Der Windpark kann die Testanlage nicht regeln, während sie sich im Testbetrieb befindet. Die Testanlage wird aber Wirkleistung einspeisen zwischen 0 MW und ihrer maximalen Wirkleistung, im Beispiel also bis 2 MW. Sofern der Windpark alle übrigen Anlagen abregelt und keine der übrigen Windenergieanlagen mehr ins elektrische Versorgungsnetz einspeist, speist die Testanlage weiterhin Wirkleistung bis maximal 2 MW in das elektrische Versorgungsnetz ein.

Da der Windpark jederzeit in der Lage sein muss, eine geforderte Parkvorgabe einzuhalten, muss der Windpark daher zu jederzeit davon ausgehen, dass die Testanlage mit ihrer maximalen Wirkleistung einspeisen könnte. Im Beispiel, in dem alle Windenergieanlagen im Windpark gleich sind, ist die normierte Wirkleistung am Netzanschlusspunkt somit nur noch auf 1/n der maximal vom Windpark bereitstellbaren Wirkleistung regelbar. Bei n=5, also fünf Windenergieanlagen im Windpark ist die normierte Wirkleistung dann nur noch auf 20 % der maximal vom Windpark bereitstellbaren Wirkleistung abregelbar.

Ebenso ist vom Windpark nicht regelbar, wie viel Blindleistung die Testanlage in das Versorgungsnetz einspeist. Der Windpark muss jedoch zu jeder Zeit in der Lage sein, eine geforderte Blindleistung bereitzustellen. Solange sich die Testanlage im Testbetrieb befindet, lässt sich der Anteil der von der Testanlage bereitgestellten Blindleistung nicht regeln. Selbst wenn alle übrigen Windenergieanlagen maximale Blindleistung bereitstellen, ist der Windpark nur bis zu einer normierten Blindleistung von ±(1-1/n) regelbar. Bei dem Beispiel mit n=5, also einem Windpark mit fünf gleichen Windenergieanlagen, könnte der Windpark eine Blindleistung nur bis zu einem maximalen Wert von betragsmäßig 80 % regeln. Der Windpark ist dann nur innerhalb des Bereichs 411 regelbar. Wird eine Wirkleistung und/oder Blindleistung angefordert, die außerhalb des Bereichs 411 liegt, könnte u.U. nicht bereitgestellt werden.

Daher wird die Kontrollprüfung durchgeführt. Wird eine Wirkleistung und/oder Blindleistung gefordert, die außerhalb des Bereichs 411 liegt, wird die Testanlage nicht vermessen oder ein bereits begonnener Testbetrieb abgebrochen.

Die Idee der Erfindung beruht auf Überlegungen im Hinblick auf die Verbesserung und Vereinfachung der Vermessung einer als Testanlage ausgewählten Windenergieanlage. Zudem findet eine Vereinfachung von Schnittstellen der gewachsenen Anlagenvielfalt statt. Dazu kann ein mobiles Testsystem vorgesehen sein, das vor Ort mit der Testanlage, also Ihrer Steuerung, über eine Schnittstelle verbunden wird. Diese Schnittstelle braucht nur Anforderungen zum Durchführen von Tests erfüllen. Es wird auch vermieden, eine Datenverbindung über eine große Distanz zu verwenden, die störanfällig sein kann und evtl. kaum noch Übertragungskapazitäten für einen solchen Test hat.

Weiterhin sollen trotz einer Vermessung der Testanlage die geforderten Anforderungen am Netzverknüpfungspunkt (parkseitig), nämlich die Parkvorgaben, eingehalten werden.

Die generelle Idee ist es, die Testanlage aus dem Parkverbund, also der Regelung des Windparks durch einen Parkrechner, rauszunehmen und mit separaten Sollwerten, die nämlich überdie Messkonstellationen vorgegeben werden können, für dieAnlagenvermessung zu steuern.

Manchmal müssen Anlagen aber auch aus anderen Gründen anders betrieben werden. Z.B. ein androhender Schaden oder für andere Testzwecke, oder eventuell um eine Störgröße für den Test des Parkrechners zu produzieren.

Insbesondere wurde folgendes Problem erkannt.

Es werden Windparks aufgebaut und dabei u.a. auch neue Windenergieanlagen eingesetzt. Das können sowohl Prototypen sein, als auch Windenergieanlagen, die noch vermessen werden müssen. Darunter fallen Leistungskurven, ein schalloptimierter Betrieb, eine PQ-Diagramm Vermessung, etc.

Dabei gibt es das Problem, dass die Windenergieanlagen nur betrieben werden dürfen, wenn sie auch regelbar sind und der Netzbetreiber für den Parkrechner Vorgaben, nämlich die Parkvorgaben machen kann.

Im schlimmsten Fall ist dann zu viel Energie im elektrischen Versorgungsnetz und der Netzbetreiber regelt den Windpark ab, z.B. auf 60%, 30% oder bis herunter auf 0%.

Aktuell müssen Absprachen getroffen werden, um die Testanlage vermessen zu können und die Testanlage wird aus der Parkregelung des Windparks herausgenommen. Dies ist mit erheblichem Aufwand verbunden. Oftmals erhält der Betreiber des Windparks nur eine begrenzte Zeit zum Vermessen der Testanlage. Besonders wenn Sturm aufkommt, soll die Testanlage vermessen werden, aber der Netzbetreiber will auch seine Steuerfähigkeit sichergestellt wissen.

Zudem weiß man vor Durchführung eines Tests nicht, was passieren wird oder könnte. Und so kann es vorkommen, dass die Testanlage nicht vermessen werden darf, obwohl keine Notwendigkeit zur Abregelung durch den Netzbetreiber bestand.

Um das Problem zu lösen wird erfindungsgemäß insbesondere folgender Aspekt vorgeschlagen.

Im Parkrechner laufen die meisten Informationen zusammen. Besonders bei einer Ethernet-Windpark-Infrastruktur hat man viele Möglichkeiten zur Datenübertragung.

Zum Validierung und Vermessern der Testanlage wird ein mobiles Testsystem, z.B. ein Rechner, eingesetzt, der mit dem Parkrechner kommuniziert.

Das Testsystem steht in der Testanlage, idealerweise gibt es dort auch noch ein Messsystem zum Vermessen der Windenergieanlage, wobei das Messsystem auch im Testsystem integriert sein kann.

Das Testsystem kann auch noch einen Internetzugang mit Fernzugriff haben.

Das Testsystem baut eine Kommunikation zum Parkrechner auf und gibt über ein Protokoll die Windenergieanlagen-Nummer der Testanlage bekannt. Das Testsystem steuert dann über den Parkrechner die als Testanlage ausgewählte Windenergieanlage fern. Dabei gibt das Testsystem der Testanlage Messkonstellationen, also Sollwerte wie Leistung, Blindleistung, simulierte Netzfrequenz oder Steuersignale, vor.

Der Parkrechner regelt den Netzanschlusspunkt. Idealerweise stehen mehrere Windenergieanlagen, z.B. 5 Stück im Windpark (mit beispielsweise jeweils 2 MW Leistung).

Je nach Bedarf und Anforderung des Netzbetreibers entscheidet der Parkrechner selbständig, ob der gewünschte Sollwert seitens des Testsystems angefahren werden kann, oder nicht.

Beispiel: Es herrscht Nenn-Wind und die Testanlage soll gerade in einem bestimmten Arbeitspunkt (P_{Soll} = 80% = 1,6 MW) vermessen werden. Der Netzbetreiber gibt für den Netzanschlusspunkt 100% (= 10 MW) vor, gestattet also eine Einspeisung von Wirkleistung bis zu 10MW. Der Parkrechner gestattet also dem Testsystem den Sollwert und steuert die Testanlage mit 80% (1,6 MW) an und die anderen vier Windenergieanlage bekommen weiterhin 100% (jeweils 2 MW) als Sollwert, denn die maximale Leistung Pₘₐₓ (10 MW) am Netzanschlusspunkt ist noch nicht erreicht.

Der Netzbetreiber erkennt zu viel Leistung im Netz und drosselt den Windpark runter auf 30%. Der Parkrechner analysiert dieses und regelt den Windpark hinunter. Unter Berücksichtigung einer groben Schätzung stellt der Parkrechner fest, dass die Testanlage ihren Testbetrieb aufrechterhalten kann. Also wird die Testanlage erstmal nicht manipuliert, sondern mit Hilfe der anderen vier Windenergieanlagen wird der Windpark auf 30% (3 MW) gedrosselt. Die Testanlage macht 80 % (1,6 MW) und die vier anderen Windenergieanlagen machen nur noch 17,5 % (0,35 MW), sodass sich insgesamt eine Leistung von 4 * 0,35 MW + 1,6 MW = 3MW (30% vom Park) ergibt. Dies wird natürlich geregelt, damit zusätzliche Verbraucher oder Windparkverluste kompensiert werden. Aber die Testanlage kann weiterhin vermessen werden.

Wenn der Netzbetreiber noch weiter herunter regelt, z.B. auf 0%, dann erkennt der Parkrechner, dass der Testbetrieb der Testanlage abgebrochen werden muss, und regelt auch die Testanlage herunter. Der Abbruch wird zum Testrechner zurückgemeldet, damit dieser den Test (zumindest ab dem Zeitpunkt des Abbruchs) als nicht gültig auswerten kann.

So ähnlich verhält es sich mit der Blindleistung für die Vermessung eines PQ-Diagramms.

Der Netzbetreiber fordert eine gewisse Blindleistungsstellfähigkeit am Netzanschlusspunkt. Diese kann relativ hoch sein und bedarf alle Windenergieanlagen im Windpark. Dies sind aber Extrem-Arbeitspunkte die nur sehr selten vom Netzbetreiber abverlangt werden. Er kann es verlangen, tut es aber selten. Aber der Windpark muss in der Lage sein, die Blindleistung zur Verfügung stellen zu können.

Wenn jetzt die Testanlage im PQ-Diagramm vermessen werden soll, muss man der Testanlage Blindleistungssollwerte vorgeben. Dies geschieht dann wieder über das Testsystem zum Parkrechner und zur Testanlage.

Beispiel: der Netzbetreiber fordert eine Blindleistung von 0 Mvar am Netzanschlusspunkt und die Testanlage soll 40 % Blindleistung Generation (spannungshebend) aufbringen. Dann erkennt der Parkrechner, dass für die Erfüllung der 0 Mvar am Netzanschlusspunkt genügend Reserven da sind und steuert die Testanlage mit Qₛₒₗₗ = 40% an.

Die übrigen vier Windenergieanlage werden in der Blindleistung geregelt und kompensieren die Testanlage (unter Vernachlässigung der Blindleistungsverschiebung durch Kabel, Trafo, Verluste, etc.) idealerweise mit Qₛₒₗₗ = -10 % (Spannungssenkend) dagegen.

Das Vermessen der Testanlage kann also durchgeführt werden.

Sollte der Netzbetreiber einen Engpass haben und fordert die gesamte Blindleistung des Windparks, erkennt das der Parkrechner und bricht das Vermessen der Testanlage ab und liefert dem Netzbetreiber die zugesagte Blindleistung. Dieser eine Test muss dann ggfs. im Nachgang wiederholt werden.

Neben den Sollwerten vom Testsystem zum Parkrechner zur Testanlage, gibt es auch den umgekehrten Weg, wo aktuelle Messdaten von der Testanlage über den Parkrechner zurück zum Testsystem gesendet werden. Genauso wie die Zustände der aktuellen Steuerung der Testanlage. Hierdurch ergibt sich eine weitere Einsatzmöglichkeit des mobilen Testsystems.

Im Testsystem selbst wird eine gewisse Logik programmiert, wo (idealerweise) alle TestSzenarien, und also alle Messkonstellationen, hinterlegt sind. Also das Abfahren von PQ-Kurven, Leistungssollwerten, Leistungskurven (dann darf die Testanlage z.B. nicht durch den Parkrechner manipuliert werden), etc.

Und wenn der Wind es zulässt bzw. wenn die Leistung entsprechend der Tests groß genug ist, werden die Tests gestartet und die Testanlage mit den entsprechenden Messkonstellationen betrieben.

So muss nur noch die Messtechnik und das Testsystem installiert werden, und nachdem die Testanlage eine Zeit lang Vermessen werden konnte, können später die Messergebnisse vom mobilen Testsystem heruntergeladen oder abgeholt werden.

Vorteile der Erfindung sind insbesondere: eine Vereinfachung der Anlagenvermessung; eine einheitliche Schnittstelle vom Testsystem zum Parkrechner, statt mehrere individuelle Schnittstellen vom Testsystem zu den verschiedenen Windenergieanlagen; das Einhaltung der Anforderungen am Netzverknüpfungspunkt trotz Vermessens der Testanlage; ein automatisierter Testablauf zum Vermessen der Testanlage; ein Reduzierung der Einsatzstunden vor Ort; ein Erhöhen möglicher Testszenarien und Auswertungen durch Automatisierung mittels Testsystem.

Nach einem weiteren Aspekt ist es auch möglich den Parkrechner zu testen, indem eine Windenergieanlage aus dem Parkregelungsverbund herausgenommen wird und diese als Störgröße betrieben wird. Es kann dann getestet werden, wie der Parkrechner auf die Störgröße reagiert.

## Patentansprüche

1. Verfahren zum Vermessen wenigstens einer als Testanlage (100') ausgewählten Windenergieanlage (100) eines mehrere Windenergieanlagen (100) aufweisenden Windparks (112), wobei
- der Windpark (112) an einen Netzanschlusspunkt eines elektrischen Versorgungsnetzes angeschlossen ist und wenigstens eine veränderliche Parkvorgabe erhält, wobei die Parkvorgabe wenigstens eine Regel vorgibt, die der Windpark (112) beim Einspeisen in das elektrische Versorgungsnetz einhalten muss,
- der Windpark (112) die Windenergieanlagen (100) mittels an die Windenergieanlagen (100) zu übertragender Anlagenvorgaben so führt, dass die Parkvorgabe eingehalten wird, und
- der wenigstens einen Testanlage (100') zum Vermessen jeweils eine Messkonstellation vorgegeben wird, die wenigstens eine Betriebseinstellung aufweist, um die wenigstens eine Testanlage (100') zum Vermessen mit der Messkonstellation in einem Testbetrieb zu betreiben, und
- der Windpark (112) so betrieben wird, dass
- die wenigstens eine Testanlage (100') mit der wenigstens einen Betriebseinstellung gemäß der Messkonstellation betrieben wird, und
- die übrigen Windenergieanlagen (100) mit Betriebseinstellungen gemäß Anlagenvorgaben betrieben werden, wobei
- die Anlagenvorgaben so bestimmt werden, dass der Windpark (112) die Parkvorgabe einhalten kann, während die wenigstens eine Testanlage (100') mit der Messkonstellation betrieben wird, und
- eine Kontrollprüfung durchgeführt wird, mit der geprüft wird, ob die wenigstens eine Testanlage (100') unter Einhaltung der Parkvorgabe zum Vermessen mit der Messkonstellation betrieben werden kann.

2. Verfahren nach Anspruch 1, **dadurch gekennzeichnet, dass** zum Vermessen derwenigstens einen Testanlage (100')
- die Messkonstellation wenigstens eine Betriebseinstellung aufweist aus der Liste umfassend
- Vorgeben eines Sollwertes einer von der wenigstens einen Testanlage (100') abzugebenden Wirkleistung,
- Vorgeben eines Sollwertes einer von der wenigstens einen Testanlage (100') abzugebenden Blindleistung,
- Vorgeben eines einzustellenden Leistungsfaktors, und
- Vorgeben einer emulierten Frequenz des elektrischen Versorgungsnetzes zum Testen eines frequenzabhängigen Verhaltens der Testanlage (100').

3. Verfahren nach einem der vorstehenden Ansprüche, **dadurch gekennzeichnet, dass** die Parkvorgabe ausgewählt ist aus der Liste umfassend
- eine Wirkleistungseinspeisung als vom Windpark (112) in das Versorgungsnetz einzuspeisende Wirkleistung,
- eine Blindleistungseinspeisung als vom Windpark (112) in das Versorgungsnetz einzuspeisende Blindleistung,
- ein vom Windpark (112) einzustellender Phasenwinkel zwischen einer Netzspannung und eingespeistem Strom,
- ein vom Windpark (112) leistungsabhängig einzustellender Phasenwinkel zwischen einer Netzspannung und eingespeistem Strom in Abhängigkeit von einer eingespeisten Wirkleistung,
- eine Blindleistungseinspeisung in Abhängigkeit von einer Änderung einer Netzspannung,
- eine leistungsabhängige Blindleistungseinspeisung als eine einzuspeisende Blindleistung in Abhängigkeit von einer eingespeisten Wirkleistung,
- eine Reserveleistung als eine Leistung, um die eine vom Windpark (112) erzeugbare Wirkleistung gedrosselt ist, und um die die vom Windpark (112) eingespeiste Wirkleistung auf ein Anforderungssignal erhöht werden kann, und
- eine Momentanreserve als vom Windpark (112) zur Reaktion auf ein Frequenzereignis zusätzlich aus kinetischer Energie einspeisbare Wirkleistung.

4. Verfahren nach einem der vorstehenden Ansprüche, **dadurch gekennzeichnet, dass**
- eine Blindleistungsstellfähigkeit eine Parkvorgabe bildet, wobei
- die Blindleistungsstellfähigkeit vorgibt, bis zu welcher Höhe der Windpark (112) eine Blindleistungseinspeisung auf eine Blindleistungsanforderung hin sicherstellen muss, wobei insbesondere
- die Blindleistungsstellfähigkeit einen Bereich (401) in einem Wirkleistungs-Blindleistungs-Diagramm mit einer Bereichsgrenze (403) definiert, und der Windpark (112) sicherstellen muss, dass jederzeit zu einer aktuell eingespeisten Wirkleistung eine Blindleistung bis zur Bereichsgrenze (403) eingespeist werden kann, und
- der Windpark (112) die Blindleistungsstellfähigkeit beim Vermessen der wenigstens einen Testanlage (100') dadurch gewährleistet, dass
- wenn der Windpark (112) eine Blindleistungsanforderung erhält, das Vermessen der wenigstens einen Testanlage (100') abgebrochen wird, wenn der Windpark (112) die Blindleistungsanforderung nur ohne Weiterführen der wenigstens einen Testanlage (100') im Testbetrieb erfüllen kann.

5. Verfahren nach einem der vorstehenden Ansprüche, **dadurch gekennzeichnet, dass**
- zum Vermessen der wenigstens einen Testanlage (100') jeweils Messkonstellationen mit unterschiedlichen Betriebseinstellungen vorgesehen sind, um die jeweilige Testanlage (100') mit unterschiedlichen Messkonstellationen zu testen,
- mit der Kontrollprüfung zusätzlich geprüft wird, welche der Messkonstellationen in Abhängigkeit vom vorherrschenden Wind, insbesondere von einer vorherrschenden Windgeschwindigkeit, für einen Anlagentest besonders bei Einhaltung der Parkvorgaben vorgebbar sind, und
- die Messkonstellation, die jeweils der wenigstens einen Testanlage (100') vorgegeben wird, aus einer Liste vorgebbarer Messkonstellationen ausgewählt wird, und insbesondere
- für die Messkonstellation eine Betriebskennlinie mit mehreren Betriebsarbeitspunkten vorgegeben wird.

6. Verfahren nach einem der vorstehenden Ansprüche, **dadurch gekennzeichnet, dass**
- mit der Kontrollprüfung in Abhängigkeit von der Parkvorgabe und der Messkonstellation geprüft wird, ob der Windpark (112) die Anlagenvorgaben den übrigen Windenergieanlagen (100) so vorgeben kann, dass beim Betreiben der wenigstens einen Testanlage (100') jeweils mit der Messkonstellation die Parkvorgabe vom Windpark (112) insgesamt eingehalten werden kann, wobei
- insbesondere geprüft wird, ob die übrigen Windenergieanlagen (100) einen fehlenden Beitrag der wenigstens einen Testanlage (100') zum Erfüllen der Parkvorgabe kompensieren können, und
- das Vermessen der wenigstens einen Testanlage (100') gestartet wird, wenn mit der Kontrollprüfung erkannt wurde, dass die Parkvorgabe eingehalten werden kann, oder
- das Vermessen der wenigstens einen Testanlage (100') abgebrochen wird, wenn mit der Kontrollprüfung erkannt wurde, dass die Parkvorgabe nicht eingehalten werden kann.

7. Verfahren nach einem der vorstehenden Ansprüche, **dadurch gekennzeichnet, dass**
- mit der Kontrollprüfung ein Testbeginn bestimmt wird, der
- einen Zeitpunkt angibt, zu dem das Vermessen der wenigstens einen Testanlage (100') gestartet wird, und/oder
- einen Zeitpunkt angibt, zu dem die Messkonstellation vorgegeben wird, und wobei
- anhand der Kontrollprüfung erkannt wird, dass zum Zeitpunkt des Testbeginns die Parkvorgabe bei gleichzeitigem Betrieb der wenigstens einen Testanlage (100') im Testbetrieb eingehalten werden kann.

8. Verfahren nach einem der vorstehenden Ansprüche, **dadurch gekennzeichnet, dass**
- zum Steuern des Vermessens ein mobiles Testsystem (150) verwendet wird, wobei
- das mobile Testsystem (150) die wenigstens eine zum Vermessen der Testanlage (100') einzustellende Messkonstellation gespeichert hat,
- das mobile Testsystem (150) mit einer Anlagensteuerung (103) der Testanlage (100') und/oder einer Parksteuerung des Windparks (112) kommuniziert, insbesondere über eine Kommunikationsschnittstelle, und
- dem Testsystem (150) die Parkvorgabe übermittelt wird, sodass das Testsystem (150) die Kontrollprüfung durchführt, oder
- der Parksteuerung die Parkvorgabe und die Messkonstellation übermittelt werden, und die Parksteuerung die Kontrollprüfung durchführt.

9. Verfahren nach einem der vorstehenden Ansprüche, **dadurch gekennzeichnet, dass**
- das Vermessen der wenigstens einen Testanlage (100') in Abhängigkeit von einem Freigabesignal des Windparks (112), insbesondere einer bzw. der Parksteuerung, gestartet wird, sodass
- das Vermessen der wenigstens einen Testanlage (100') nur startet, wenn durch das Freigabesignal eine Freigabe erteilt wurde, und
- der Windpark (112) die Freigabe wieder entzieht und das Vermessen der wenigstens einen Testanlage (100') abgebrochen wird, wenn erkannt wird, dass die Parkvorgabe nicht mehr eingehalten werden kann, wobei insbesondere
- ein bzw. das mobile Testsystem (150) eine Freigabeanfrage zum Abrufen des Freigabesignals an den Windpark (112) stellt.

10. Verfahren nach einem der vorstehenden Ansprüche, **dadurch gekennzeichnet, dass**
- zum Vermessen der wenigstens einen Testanlage (100') mehrere Testdurchläufe mit unterschiedlichen Messkonstellationen vorgesehen sind, und
- die Kontrollprüfung jeweils für einen geplanten Testdurchlauf durchgeführt wird, und,
- wenn mit der Kontrollprüfung erkannt wurde, dass ein erster geplanter Testdurchlauf unter Einhaltung der Parkvorgabe nicht durchgeführt werden kann, ein zweiter Testdurchlauf mit gegenüber dem ersten geplanten Testdurchlauf geänderter Messkonstellation durchgeführt wird, mit dem die Parkvorgabe eingehalten werden kann.

11. Verfahren nach einem der vorstehenden Ansprüche, **dadurch gekennzeichnet, dass**
- das Vermessen derwenigstens einen Testanlage (100') mittels mehrerer Testdurchläufe mit unterschiedlichen Messkonstellationen erfolgt, und
- den Testdurchläufen eine Reihenfolge vorgegeben wird,
- und die Testdurchläufe gemäß der Reihenfolge durchgeführt werden, sofern das nach der Kontrollprüfung zulässig ist, wobei
- ein Testdurchlauf umso weiter vorne in der Reihenfolge einsortiert wird, je mehr Leistung und/oder Blindleistung von der wenigstens einen Testanlage (100') bei dem Testdurchlauf in das Versorgungsnetz eingespeist werden soll.

12. Windpark (112) mit mehreren Windenergieanlagen (100), wobei wenigstens eine Windenergieanlage (100) als Testanlage (100') ausgewählt ist, und
- der Windpark (112) an einen Netzanschlusspunkt eines elektrischen Versorgungsnetzes angeschlossen ist und wenigstens eine veränderliche Parkvorgabe erhält, wobei die Parkvorgabe wenigstens eine Regel vorgibt, die der Windpark (112) beim Einspeisen in das elektrische Versorgungsnetz einhalten muss,
- der Windpark (112) eine Parksteuerung aufweist, und die Parksteuerung Anlagenvorgaben an die Windenergieanlagen (100) überträgt, sodass die Windenergieanlagen (100) so geführt werden, dass die Parkvorgabe eingehalten wird, und
- der wenigstens einen Testanlage (100') zum Vermessen jeweils eine Messkonstellation vorgegeben wird, die wenigstens eine Betriebseinstellung aufweist, um die wenigstens eine Testanlage (100') zum Vermessen mit der Messkonstellation zu betreiben, und
- die Parksteuerung den Windpark (112) so steuert, dass
- die wenigstens eine Testanlage (100') mit der wenigstens einen Betriebseinstellung gemäß Messkonstellation betrieben wird, und
- die übrigen Windenergieanlagen (100) mit Betriebseinstellungen gemäß Anlagenvorgaben betrieben werden, wobei
- die Anlagenvorgaben so bestimmt werden, dass der Windpark (112) die Parkvorgabe einhalten kann, während die wenigstens eine Testanlage (100') mit der Messkonstellation betrieben wird, und
- die Parksteuerung und/oder ein mobiles Testsystem (150) eine Kontrollprüfung durchführt, mit der geprüft wird, ob die Vermessung unter Einhaltung der Parkvorgabe vorgenommen werden kann.

13. Windpark (112) nach Anspruch 12, **dadurch gekennzeichnet, dass**
- der Windpark (112), insbesondere die Parksteuerung, dazu eingerichtet ist, das Vermessen der wenigstens einen Testanlage nach einem der Ansprüche 1-11 durchzuführen.

14. Mobiles Testsystem (150) zum Vermessen einer als Testanlage ausgewählten Windenergieanlage (100) eines mehrere Windenergieanlagen (100) aufweisenden Windparks (112), wobei
- das mobile Testsystem (150) ein mobiles Messsystem und/oder mobiles Steuersystem ist oder umfasst, und das Vermessen gemäß einem der Ansprüche 1-11 erfolgt und insbesondere
- das Testsystem (150) die wenigstens eine Messkonstellation gespeichert hat und
- eine Parkkommunikationsschnittstelle aufweist, die dazu vorbereitet ist, dass das Testsystem (150) mit einem Windpark (112), insbesondere einer Parksteuerung eines Windparks (112) nach Anspruch 12 oder 13 kommuniziert, und/oder
- eine Anlagenkommunikationsschnittstelle aufweist, die dazu vorbereitet ist, dass das Testsystem (150) mit einer Windenergieanlage (100), insbesondere der zu vermessenden Windenergieanlage kommuniziert.
